## Europäisches Patentamt
## European Patent Office
## Office européen des brevets

(19)

(11) Publication number: **0 012 274**
**B1**

(12) **EUROPEAN PATENT SPECIFICATION**

(45) Date of publication of patent specification: **11.05.83**

(51) Int. Cl.³: **G 02 B 7/26**

(21) Application number: **79104743.4**

(22) Date of filing: **28.11.79**

(54) Mechanical optical switching device.

(30) Priority: **29.11.78 JP 147620/78**

(43) Date of publication of application:
**25.06.80 Bulletin 80/13**

(45) Publication of the grant of the patent:
**11.05.83 Bulletin 83/19**

(84) Designated Contracting States:
**DE FR GB IT NL**

(56) References cited:
**US - A - 4 013 342**

**DIGEST OF TECHNICAL PAPERS, Conference relating to Laser and Electro-Optical Systems, 7 to 9 February 1978 held in California M. SHIMIZU et al. "Optical fiber switches and their applications" pages 54 and 55 (abstract)**

**Patents Abstracts of Japan Vol. 3, No. 15, 9 February 1979 page 135 E89**

(73) Proprietor: **NIPPON ELECTRIC CO., LTD.**
**33-1, Shiba Gochome, Minato-ku**
**Tokyo, 108 (JP)**

(72) Inventor: **Aoyama, Tsutomu**
**c/o Nippon Electric Co., Ltd. 33-1, Shiba Gochome Minato-ku Tokyo (JP)**

(74) Representative: **Vossius Vossius Tauchner Heunemann Rauh**
**Siebertstrasse 4 P.O. Box 86 07 67**
**D-8000 München 86 (DE)**

(56) References cited:
**NEC RESEARCH DEVELOPMENT, No. 52, January 1979 Tokyo T. AOYAMA "High Reproducibility Optical Switch for Optical Fiber Transmission" pages 44 to 50 * fig. 4 and 9 ***

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

## Mechanical optical switching device

This invention relates to an optical switching device. Such devices can be used for optical communication systems and, more particularly, for mechanically switching optical transmission paths.

In optical communication systems using an optical fiber as a transmission medium, which has been intensively developed while attracting a great public concern, optical switching devices for the mutual connection and disconnection of optical transmission paths are indispensably used. More specifically, a semiconductor laser has been in use as each light source of a plurality of repeaters, each of which has an optical switching device, to perform the optical communication. However, since no semiconductor lasers with sufficient life time have been developed yet, a great number of semiconductor lasers are provided in the repeaters to maintain the reliability of the communication. Namely, when one laser in use fades due to its life time, another laser is activated and the remaining lasers are subsequently activated in this manner. The maintenance for the light source involves much troublesome work, however.

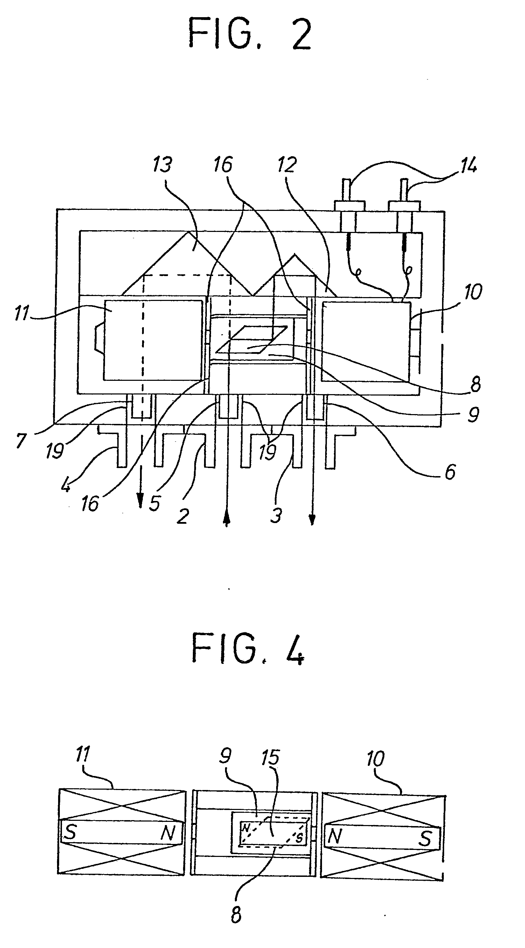

For a conventional optical switching device, an electro-optical switching device based on the optical integration technique is proposed in a paper entitled "Electrically Switched Directional Coupler: Cobra", by M. Papuchon et al., APPLIED PHYSICS LETTERS Vol. 27, No. 5, pp. 289 to 291, September 1 issue, 1975 (reference 1). This switching device can be operated at a high switching speed, whereas it has a disadvantage in that the switching device has a large amount of insertion loss and the loss is greatly affected by the change in temperature. As one solution of this problem, there is an approach of employing a mechanical optical switching device with a low insertion loss but with a relatively low switching speed. For the details of this switching device, reference is made to a paper entitled "WFF2 Optical Fiber Switches and Their Applications" (reference 2) by M. Shimizu et al., Digest of Technical Papers distributed in the CONFERENCE relating to LASER AND ELECTRO-OPTICAL SYSTEMS held in California in February 7 to 9, 1978, pp. 54 to 55, in particular Fig. 2B. This switching device is provided with a large prism for performing the switching operation for the fibers 1, 2 and 3 shown in Fig. 2B. The use of the large prism is indispensable to this device to widen the mutual intervals among the fibers 1, 2, and 3. As a result, a considerably large current is needed to actuate the prism-driving electromagnets, causing a decrease in switching speed among the fibers. The US—A 4 013 342 (reference 3) describes a keyboard with optical switching and light distribution means. In particular a three way fiber optic switch is provided including a movable ellipsoidal reflector and three fixed fiber optics, namely one input fiber and two output fibers. The light from the input fiber is alternatively coupled to one of the output fibers by moving the reflector between two positions. As with the above mechanical optical switching device the mutual intervals among the fibers depend on the size of the movable part of the switch, namely the distance between the two focal points of the reflector. As a consequence, the power consumption is increased and the switching speed is decreased when said intervals are to be widened.

Accordingly, one object of the invention is to provide a mechanical optical switching device with a high switching speed and a low power consumption.

The switching device according to the invention is characterized by the features of the claims.

According to a preferred embodiment of the invention, there is provided a mechanical optical switching device which comprises: an input receptacle with an input optical fiber mounted thereto; first and second output receptacles, each having an output fiber mounted thereto for outputting the input light beam transmitted through said input receptacle; an input lens for collimating the input light beam; movable optical path-changing means with two reflecting surfaces for reflecting the collimated light beam passing through the input lens, said movable optical path-changing means being disposed at the rear of the input lens in the optical path; first fixed optical path-changing means with two reflecting surfaces for reflecting the collimated light beam from the movable optical path-changing means, the first fixed optical path-changing means being disposed at the rear of said movable optical path-changing means; second fixed optical path-changing means with two reflecting surfaces for reflecting the collimated light beam passing the input lens, the second fixed optical path-changing means being disposed at the rear of said movable optical path-changing means; first and second output lenses disposed in front of the first and second output receptacles for converging the collimated light beams passing through the first and second fixed optical path-changing means; and means for inserting the movable optical path-changing means into the optical axis of said input lens or removing the same from the optical axis.

The features of the first part of claim 1 are generally known from references 2 and 3, and the features a, b, and c of claim 2 are generally known from reference 2.

Now the invention will be described in greater detail in conjunction with the accompanying drawings, in which:

Figs. 1 and 2 respectively show a perspective view partially broken and a plane view of one embodiment of the invention;

Fig. 3 shows a perspective view of a part of the embodiment shown in Figs. 1 and 2; and

Fig. 4 shows a view of a part of the embodiment useful in describing the operation of the invention.

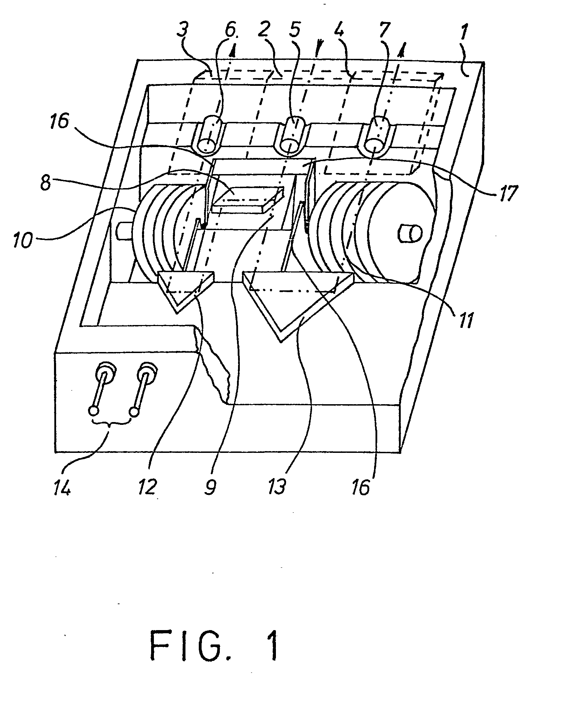

Referring now to Figs. 1 and 2, the present switching device is composed of an input receptacle 2 to which an input optical fiber (not shown) is mounted, first and second output receptacles 3 and 4, each of which has an output fiber (not shown) mounted thereto for outputting the input light beam transmitted through the input receptacle 2 an input lens 5 for collimating the input light beam, a parallelogram prism 8 disposed at the rear of the input lens 5 in the optical path and having two perfect reflecting surfaces which are opposite and parallel to each other to reflect the collimated light beam passing through the input lens 5, a first triangle prism 12 disposed at the rear of the parallelogram prism 8 and having two perfect reflecting surfaces for reflecting the collimated light beam from the prism 8, a second triangle prism 13 disposed at the rear of the prism 8 and having two perfect reflecting surfaces for reflecting the collimated light beam passing through the input lens 5, first and second output lenses 6 and 7 disposed in front of the first and second output receptacles 3 and 4 for converging the collimated light beam passing through the first and second triangle prisms 12 and 13, and electromagnets 10 and 11 for inserting or removing the parallelogram prism 8 to or from the optical axis of the input lens 5.

A case 1 for accommodating the above-mentioned structural elements is made of nonmagnetic material such as aluminum, resin or the like. The input receptacle 2, and the output receptacles 3 and 4 disposed on both sides of the input receptacle 2 are fixedly mounted on one of side walls of the case 1. The receptacle 2 has an input fiber for introducing the input light beam containing meaningful information into the present switching device. Similarly, the receptacles 3 and 4 have output fibers for giving the light beams to the outside of the present switching device. Further, through-holes 19 are formed in the side wall onto which the receptacles 2, 3 and 4 are attached correspondingly. The input rod lens 5 for converting the light beam from the receptacle 2 into the collimated light beam, and the rod lenses 6 and 7 arranged in front of the output receptacles 3 and 4, respectively, for converging the light beam from the receptacle 2 are fixed in the holes 19 by a proper binding agent such as epoxy resin. Further provided within the case 1 are a holder 9 for holding the reflecting member 8 and a guide member 17 for guiding the holder 9. The electromagnets 10 and 11 are driven by electric power supplied through power source terminals 14.

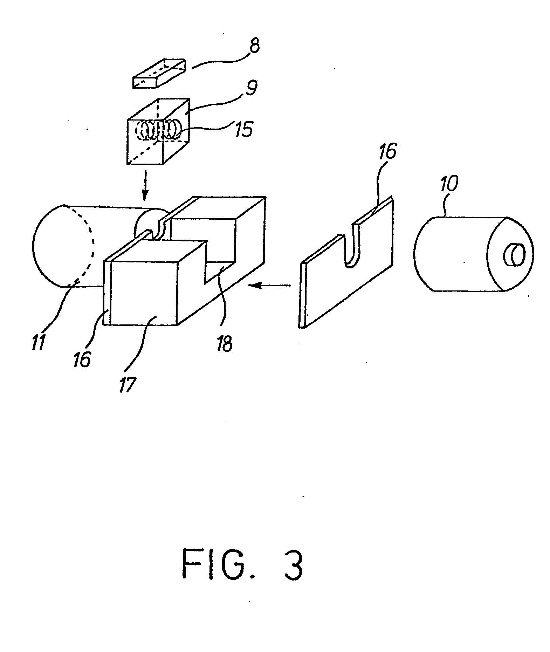

Referring to Fig. 3, the guide member 17 is provided with a groove 18 along which the holder 9 slides. The reflecting member 8 is mounted on the holder 9 in which a permanent magnet 15 is provided. On both sides of the guide 17, stoppers 16 are provided to prevent the holder 9 from coming off the groove 18. The guide member 17, the holder 9 and the stoppers 16 may be made of corrosion resistive material such as stainless steel.

The operation of the present switching device will be described with reference to Figs. 2 and 4. It is assumed now that the electromagnets 10 and 11 are actuated such that the holder 9 is attracted by the electromagnet 10 and the reflecting member 8 is apart from the axial line of the lens 5 as shown Fig. 4. The light beam emitted through the receptacle 2 is collimated by the lens 5. The collimated light beam is reflected by the prism 13 and is then converged by the lens 7 and is led to the receptacle 4. When the electromagnets 10 and 11 are energized with the polarities opposite to those shown in Fig. 4, the reflecting member 8 is moved and placed on the axial line of the lens 5, so that the optical path of the collimated light beam coming froms lens 5 is changed within the reflecting member 8. The light beam with the optical path thus changed is reflected by the prism 12 and is then converged by the lens 6 to be led to the receptacle 3. As described above, the light beam coming through receptacle 2 is directed toward the receptacle 3 or 4 depending on the insertion of the reflecting member 8 into the axial line of the lens 5 or the removal of it from the axial line.

With such a construction, the electromagnets 10 and 11 of a relatively small size may be used for driving the reflecting member 8 since the collimated light is changed in its optical path by the small parallelogram prism 8 and is again reflected by the triangle prisms 12 and 13.

A mechanical optical switching device designed on the basis of the structure of Fig. 1 brought about the following results: Insertion loss of the switch, switching speed, and crosstalk are 1.5 dB (decibel), 5 ms (milliseconds) and —55 dB, respectively. The components used and the physical dimensions thereof were as follows: Graded-index rod lenses, each with 2.7 mm (millimeters) in length and 1.8 mm in diameter are used for the lenses 5, 6 and 7; the spacing between the lenses 5 and 6 or 5 and 7 is 16 mm; the fibers coupled with the receptacles 2, 3 and 4 are of graded-index type with the core diameter of sixty microns and N.A. (numerical aperture) = 0.21; light emitting diode with the wave length 0.85 micron is used as the light source (not shown); the drive voltage and current for the electromagnets 10 and 11 are twelve volts and 50 milliamperes, respectively; the prisms 12 and 13 have bottom sides of 16 mm and 18 mm, respectively; and the case 1 is 53 mm in width, 17 mm in height, and 26 mm in depth.

**Claims**

1. A mechanical optical switching device with an input receptacle, two output receptacles and a movable optical path-changing means (8) having two switching positions, the first switching position being such that the input light beam from the input receptacle (2) is directed to the first output receptacle (3) and the second switching position being such that the input light beam is directed from the input receptacle (2) to the second output receptacle (4), characterized by first and second fixed optical path-changing means (12, 13) associated with the first and the second output receptacles (3 and 4, respectively) and by the fact that in the first switching position the light beam is directed from the input receptacle (2) to the first output receptacle (3) via the movable path changing means (8) and the first fixed optical path changing means (12) and that in the second switching position the light beam is directed from the input receptacle (2) to the second output receptacle (4) via the second fixed optical path-changing means (13).

2. A mechanical optical switching device according to claim 1, comprising

a) an input optical fiber mounted to said input receptacle (2) and an input lens for collimating the input light beam,

b) an output fiber mounted to each of said output receptacles (3, 4) for outputting the input light beam transmitted through said input receptacle (2) and first and second output lenses (6 and 7, respectively) disposed in front of said first and second output receptacles (3 and 4, respectively) for converging said collimated light beam from the input receptacle (2),

c) said movable optical path-changing means (8) having two reflecting surfaces for reflecting the collimated light beam passing through said input lens (5) and being disposed at the rear of said input lens (5) in the optical path,

d) said first fixed optical path-changing means (12) having two reflecting surfaces for reflecting the collimated light beam from said movable optical path-changing means (8), and being disposed at the rear of said movable optical path-changing means (8) in the optical path,

e) said second fixed optical path-changing means (13) having two reflecting surfaces for reflecting the collimated light beam passing through said input lens (5), and being disposed at the rear of said movable optical path-changing means (8) in the optical path, and

f) means (10, 11) for inserting said movable optical path-changing means (8) into the optical axis of said input lens (5) or removing the same from said optical axis, whereby said input light beam from the input receptacle (2) is directed to said first output receptacle (3) in response to the insertion of said movable optical path-changing means (8) into said optical axis, while said input light beam is directed toward the second output receptacle (4) in response to the removal of said movable optical path-changing means (8) from said optical axis.

3. A mechanical optical switching device as claimed in claim 1 or 2, wherein said movable optical path-changing means (8) is composed of a parallelogram prism with two reflecting surfaces, which are opposite to each other.

4. A mechanical optical switching device as claimed in any of claims 1 to 3, wherein said first and second fixed optical path-changing means (12 and 13, respectively) are triangle prisms, respectively.

**Patentansprüche**

1. Mechanisch-optische Schaltvorrichtung mit einer Eintrittsbuchse, zwei Austrittsbuchsen und einer beweglichen Einrichtung (8) zum Ändern des optischen Weges mit zwei Schaltpositionen, wobei der eintretende Lichtstrahl in der ersten Schaltposition von der Eintrittsbuchse (2) zur ersten Austrittsbuchse (3) und in der zweiten Schaltposition von der Eintrittsbuchse (2) zur zweiten Austrittsbuchse (4) geleitet wird, gekennzeichnet durch, mit der ersten und der zweiten Austrittsbuchse (3 bzw. 4) verbundene erste und zweite feststehende Einrichtungen (12) (13) zum Ändern des optischen Weges und dadurch, daß in der ersten Schaltposition der Lichtstrahl von der Eintrittsbuchse (2) über die bewegliche Einrichtung (8) zum Ändern des optischen Weges und die erste feststehende Einrichtung (12) zum Ändern des optischen Weges zur ersten Austrittsbuchse (3) geleitet wird, und daß in der zweiten Schaltposition der Lichtstrahl von der Eintrittsbuchse (2) über die zweite feststehende Einrichtung (13) zum Ändern des optischen Weges zur zweiten Austrittsbuchse (4) geleitet wird.

2. Mechanisch-optische Schaltvorrichtung nach Anspruch 1, gekennzeichnet durch

a) eine an der Eintrittsbuchse (2) angeordnete optische Eintrittsfaser und eine Eintrittslinse zum Kollimieren des eintretenden Lichtstrahles,

b) jeweils eine an jeder der Austrittsbuchsen (3, 4) angeordnete Austrittsfaser zum Abführen des durch die Eintrittsbuchse (2) übertragenen eintretenden Lichtstrahles und vor der ersten und zweiten Austrittsbuchse (3 bzw. 4) angeordnete erste und zweite Austrittslinsen (6 bzw. 7) zum Bündeln des kollimierten Lichtstrahles von der Eintrittsbuchse (2),

c) zwei reflektierende Oberflächen der beweglichen Einrichtung (8) zum Ändern des optischen Weges, durch die der durch die Eintrittslinse (5) geführte kollimierte Lichtstrahl reflektiert wird und die im optischen Weg nach der Eintrittslinse (5) angeordnet sind,

d) zwei reflektierende Oberflächen der ersten feststehenden Einrichtung (12) zum Ändern des optischen Weges, durch die der kollimierte Lichtstrahl von der beweglichen Einrichtung (8) zum Ändern des optischen Weges reflektiert wird, und die im optischen Weg nach der beweglichen Einrichtung (8) zum Ändern des optischen Weges angeordnet sind,

e) zwei reflektierende Oberflächen der zweiten feststehenden Einrichtung (13) zum Ändern des optischen Weges, durch die der durch die Eintrittslinse (5) geführte kollimierte Lichtstrahl reflektiert wird und die im optischen Weg nach der beweglichen Einrichtung (8) zum Ändern des optischen Weges angeordnet sind, und

f) Einrichtungen (10, 11), durch die die bewegliche Einrichtung (8) zum Ändern des optischen Weges in die optische Achse der Eintrittslinse (5) einführbar und daraus entfernbar ist, wobei der eintretende Lichtstrahl von der Eintrittsbuchse (2) zur ersten Austrittsbuchse (3) geleitet wird, wenn die bewegliche Einrichtung (8) zum Ändern des optischen Weges in die optische Achse eingeführt ist, während der eintretende Lichtstrahl zur zweiten Austrittsbuchse (4) geleitet wird, wenn die bewegliche Einrichtung (8) zum Ändern des optischen Weges aus der optischen Achse entfernt ist.

3. Mechanisch-optische Schaltvorrichtung nach Anspruch 1 oder 2, dadurch gekennzeichnet, daß die bewegliche Einrichtung (8) zum Ändern des optischen Weges ein parallelogrammförmiges Prisma mit zwei einander gegenüberliegenden reflektierenden Oberflächen aufweist.

4. Mechanisch-optische Schaltvorrichtung nach einem der Ansprüche 1 bis 3, dadurch gekennzeichnet, daß die erste und die zweite feststehende Einrichtung (12 bzw. 13) zum Ändern des optischen Weges jeweils ein dreieckiges Prisma ist.

**Revendications**

1. Dispositif mécanique de commutation optique comportant un réceptacle d'entrée, deux réceptacles de sortie et un moyen mobile de changement de trajet optique (8) à deux positions de commutation; la première position de commutation étant telle que le faisceau lumineux d'entrée issu du réceptacle d'entrée (2) est dirigé vers le premier réceptacle de sortie (3) et la seconde position de commutation étant telle que le faisceau lumineux d'entrée soit dirigé du réceptacle d'entrée (2) au second réceptacle de sortie (4), caractérisé en ce qu'il comporte des premier et second moyens fixes (12, 13) de changement de trajet optique associés aux premier et second réceptacles (3 et 4, respectivement) de sortie, et en ce que dans la première position de commutation, le faisceau lumineux est dirigé du réceptacle (2) d'entrée au premier réceptacle (3) de sortie en passant par le moyen mobile (8) de changement de trajet optique et le premier moyen fixe (12) de changement de trajet optique et en ce que dans la deuxième position de commutation le faisceau lumineux est dirigé du réceptacle (2) d'entrée au second réceptacle (4) de sortie en passant par le second moyen (13) fixe de changement de trajet optique.

2. Dispositif mécanique de commutation optique selon la revendication 1, caractérisé en ce qu'il comprend:

(a) une fibre optique d'entrée montée sur le réceptacle d'entrée (2) et une lentille d'entrée pour collimater le faisceau lumineux d'entrée,

(b) une fibre optique de sortie montée sur chacun des réceptacles de sortie (3, 4) pour délivrer le rayon lumineux d'entrée transmis à travers le réceptacle (2) d'entrée et les première et seconde lentilles de sortie (6 et 7, respectivement) disposées en face des premier et second réceptacles de sortie (3 et 4, respectivement) pour fair converger le faisceau lumineux collimaté issu du réceptacle d'entrée (2),

(c) le moyen (8) mobile de changement de trajet optique ayant deux surface réfléchissantes pour réfléchir le faisceau lumineux collimaté qui passe à travers la lentille d'entrée (5) et étant disposé en arrière de la lentille (5) d'entrée sur le trajet optique,

(d) le premier moyen fixe (12) de changement de trajet optique ayant deux surfaces réfléchissantes pour réfléchir le faisceau de lumière collimaté issu du moyen mobile (8) de changement de trajet optique et étant disposé en arrière du moyen mobile (8) de changement de trajet optique sur le trajet optique,

(e) le second moyen fixe (13) de changement de trajet optique ayant deux surface réfléchissantes pour réfléchir le faisceau lumineux collimaté qui passe à travers la lentille d'entrée (5) et étant disposé en arrière du moyen mobile (8) de changement de trajet optique sur le trajet optique; et

(f) des moyens (10, 11) pour intercaler le moyen (8) mobile de changement de trajet optique sur l'axe optique de la lantille d'entrée (5) ou enlever celui-ci de l'axe optique, à la suite de quoi le faisceau lumineux d'entrée issu du réceptacle d'entrée (2) est dirigé vers le premier réceptacle de sortie (3) en réponse à l'insertion du moyen (8) mobile de changement de trajet optique sur l'axe optique, pendant que le faisceau lumineux d'entrée est dirigé vers le second réceptacle (4) de sortie en réponse à l'enlèvement du moyen (8) mobile de changement de trajet optique de l'axe optique.

3. Dispositif mécanique de commutation optique selon l'une des revendications 1 ou 2, caractérisé en ce que le moyen mobile (8) de changement de trajet optique se compose d'un prisme en parallélogramme comportant deux surface réfléchissantes opposées l'une à l'autre.

4. Dispositif mécanique de commutation optique selon l'une quelconque des revendications 1 à 3, caractérisé en ce que les premier et second moyens fixes (12 et 13 respectivement) de changement de trajet optique sont des prismes triangulaires respectivement.

FIG. 1

# FIG. 2

# FIG. 4

FIG. 3